# EUROPÄISCHE PATENTANMELDUNG

(11) **EP 0 955 189 A2**
(43) Veröffentlichungstag der Anmeldung: **10.11.1999**
(21) Anmeldenummer: 99107870.0
(22) Anmeldetag: 21.04.1999
(51) Int. Cl.: B60H 1/34, B60K 37/06

(54) **Verkleidungsteil**

(30) Priorität: 07.05.1998 DE 19820337
(71) Anmelder: DaimlerChrysler AG, 70567 Stuttgart (DE)
(72) Erfinder: Lecher, Franz, 71069 Sindelfingen (DE); Reichel, Anton, 71254 Ditzingen (DE); Sacco, Bruno, 71067 Sindelfingen (DE); Scheper, Hubert, 71263 Weil der Stadt (DE)

(57) **Zusammenfassung**

Die Erfindung betrifft ein Verkleidungsteil zum Anbau an eine Stirnwand einer Fahrgastzelle eines Fahrzeugs mit einer Instrumententafel (11) und mit einer mittig am unteren Instrumententafelbereich ansetzenden, sich in Längsrichtung der Fahrgastzelle fortsetzenden Mittelkonsole (12). Zur Schaffung von genügend Freifläche für eine zusammenfassende Unterbringung einer Vielzahl von Bedienelementen mit oder ohne Kontroll- und Anzeigeelementen in einer zusammenhängenden Bedieneinheit und von großflächigen Luftaustrittsöffnungen (14,15,16) ist die Instrumententafel (11) mit einem zur Mittelkonsole (12) schräg geneigt verlaufenden, endseitig in die Mittelkonsole übergehenden, haubenförmigen Mittelteil (13) ausgeführt und mit einer das Mittelteil im Abstand zu dessen Vorderfläche (131) überspannenden Brückenkonsole (20) versehen, die sich von dem oberen Instrumententafelbereich bis zur Mittelkonsole erstreckt.

## Beschreibung

Die Erfindung betrifft ein Verkleidungsteil zum Anbau an eine Stirnwand einer Fahrgastzelle eines Fahrzeugs der im Oberbegriff des Patentanspruchs 1 angegebenen Gattung.

Ein bekanntes Verkleidungsteil dieser Art (DE 44 36 420 C2) weist eine Instrumententafel sowie eine von der Instrumententafel ausgehende, auf einem die Fahrgastzelle mittig durchziehenden Tunnel befestigte, haubenförmige Mittelkonsole auf, die ein zwischen den Vordersitzen der Fahrgastzelle sich parallel zum Tunnel erstreckendes, Längsteil und ein den Übergang zur Instrumententafel herstellendes, schräg ansteigendes Vorder-, Übergangs- oder Mittelteil aufweist, in dem Funktionsschalter, z.B. zur Betätigung von elektrischen Fensterhebern, angeordnet sind. Im Längsteil der beispielsweise als schalenförmiges Kunststofformteil ausgebildeten Mittelkonsole sind Schalthebel oder Getriebewählhebel eines Schaltblockes sowie eine Ablage angeordnet, die Anschlüsse und Halterungen zur Aufnahme einer unterschiedlich ausgestalten Individualbox vorhält.

Bei einem ebenfalls bekannten Verkleidungsteil (DE 20 26 489 A1) ist die Mittelkonsole bis an die den Motorraum von der Fahrgastzelle trennenden Stirnwand der Fahrzeugkarosserie herangeführt und auf die Mittelkonsole der Luftverteilerraum einer Klimaanlage aufgesetzt, der auf seiner der Fahrgastzelle zugekehrten Vorderseite von der bis zur Mittelkonsole reichenden Instrumententafel abgedeckt ist. Von dem Luftverteilerraum führen Luftkanäle zu in der Instrumententafel unterhalb der Frontscheibe angeordneten, schlitzartigen Defrosterdüsen, zu mittig angeordneten Mitteldüsen und zu nahe den Seitenfenstern angeordneten Seitendüsen, sowie durch die Mittelkonsole hindurch zu im Fond angeordneten Fonddüsen. In den beiden Seitenwänden des Luftverteilerraums selbst sind unterhalb der Instrumententafel liegende Fußraumdüsen zur Belüftung des Fußraums von Fahrer und Beifahrer angeordnet, die mittels Absperrklappen wahlweise verschließbar sind. Durch die Vielzahl der Luftaustrittsöffnungen sowie der notwendigen Anordnung weiterer Ausrüstungsteile, wie Beifahrer-Airbag, Radio, Ablagefächer und dgl., steht für die Unterbringung von Bedien- und Anzeigeelementen nur wenig Freifläche in dem Verkleidungsteil zur Verfügung, obwohl die Zahl der Bedienelemente aufgrund der zunehmenden Motorisierung von Einsteilvorgängen, wie Sitzverstellung, Fensterheber, Spiegeleinstellung, Kopfstützeneinstellung und dgl., sich laufend vergrößert.

Bei einer bekannten Fahrerkabine eines Lastkraftwagens (US 3 194 338) ist auf einem entlang der Frontscheibe sich erstreckenden Armaturenbrett ein Instrumentenpult unmittelbar am Steuerrad angeordnet und auf dem Kardantunnel eine als hohles Gehäuse ausgebildete erste Konsole befestigt, die sich in Kabinenlängsrichtung zwischen den Sitzen bis zum Armaturenbrett erstreckt und im hinteren Bereich ein Handschuhfach enthält. Auf dieser geradflächigen kastenförmig ausgebildeten ersten Konsole ist eine weitere, sich nach hinten verjüngende Konsole befestigt. Auf den dem Fahrer zugekehrten Seitenflächen der beiden Konsolen sind eine Vielzahl von Schaltern und Kontrollanzeigen untergebracht.

Aus der DE 35 01 714 A1 ist ein Ablageanordnung im Tunnelbereich von Lastkraftwagen bekannt, die eine tunnelfeste, sich in Fahrzeuglängsrichtung erstreckende Ablage und einen Kastenaufsatz aufweist, der bezüglich der unteren Ablage längsverschieblich ist. Der Kastenaufsatz besteht seinerseits aus einer unteren, oben offenen Staubox mit seitlichen von vorn nach hinten abfallenden Führungselementen und einem oberen, in den Führungselementen verschieblich geführten Tischelement, so daß der Kastenaufsatz in horizontaler Richtung längs der unteren Ablage verschoben und auch ggf. das obere Tischelement bezüglich der Staubox angehoben werden kann. Dadurch wird eine einfache und variable Mehrzweck-Konstruktion in Modulbauweise geschaffen.

Aus der DE 42 36 850 C1 ist eine zwischen Fahrer- und Beifahrersitz eines Nutzfahrzeugs angeordnete Konsole mit Ablagen und einem oberhalb der Ablagen verschiebbaren Element mit Arbeits- und/oder Trittfläche bekannt, die auf einem zwischen den Sitzen sich erstreckenden Kardantunnel befestigt ist. Zwecks Ausgestaltung der Konsole als zentraler Funktionsbereich mit ergonomisch plazierter Ablage- und/oder Arbeitsfläche sind die Ablagen als Aufnahmemodule für Bedienelemente, Installationseinheiten und/oder Gegenstände ausgebildet und bündig zu einem Modulblock gereiht. Ablage- und/oder Arbeitsfläche sowie eine Steighilfe zum Durchtritt zwischen Fahrer- und Beifahrersitz wird durch einen Bügel realisiert, der mit geringem Abstand zur Moduloberfläche in auf dem Tunnel befestigten Schienen längs des Modulblocks verschiebbar ist.

Aus der DE 29 24 979 A1 ist ebenfalls eine Ablage für ein Nutzfahrzeug-Fahrerhaus bekannt, die auf dem zwischen Fahrer- und Beifahrersitz verlaufenden Motortunnel befestigt ist und einen von einer Randeinfassung umschlossenen Stauraum bietet. Zur Realisierung einer Arbeitsfläche für den Fahrer oder Beifahrer ist dem Stauraum ein Deckelteil zugeordnet, das mit der Randeinfassung scharniermäßig verbunden ist und auf seiner Unterseite eine Arbeitsfläche trägt. Durch Umklappen des Deckelteils um 180° wird die Arbeitsfläche zum Gebrauch nach oben geschwenkt.

Der Erfindung liegt die Aufgabe zugrunde, ein Verkleidungsteil der eingangs genannten Art so zu verbessern, daß genügend Freifläche für die zusammenfassende Unterbringung einer Vielzahl von Bedienelementen mit oder ohne Kontroll- und Anzeigeelementen in einer zusammenhängenden Bedieneinheit vorhanden ist.

Die Aufgabe ist erfindungsgemäß durch die Merkmale des Patentanspruchs 1 gelöst.

Das erfindungsgemäße Verkleidungsteil hat den Vorteil, daß durch die Einführung der die Vorderfläche des Mittelteils der Konsole überspannenden Brückenkonsole auf deren Oberseite ein großflächiger Bereich zur Unterbringung beliebiger Instrumente, Kontrolleuchten, Schalter und dgl., angeboten wird, ohne daß die Nutzungsmöglichkeit der Vorderfläche des Mittelteils der Instrumententafel dadurch nennenswert eingeschränkt wird. Dieser wird vielmehr durch Unterbringung von Luftaustrittsöffnungen zusätzlich zu üblicherweise in der Instrumententafel selbst vorhandenen Luftaustrittsöffnungen für eine komfortable Belüftung des Fahrer- und Beifahrerraums genutzt, wobei durch die Größe der zur Verfügung stehenden Freiflächen auf dem Mittelteil die Luftaustrittsöffnungen und die sie überdeckenden Luftgitter mit größerer Designfreiheit konzipiert werden können.

Vorteilhafte Ausführungsformen des erfindungsgemäßen Verkleidungsteils mit zweckmäßigen Ausgestaltungen der Erfindung ergeben sich aus den weiteren Ansprüchen.

Gemäß einer vorteilhaften Ausführungsform der Erfindung ist die Brückenkonsole trennbar von der Instrumententafel und der Mittelkonsole ausgebildet. Dadurch ist es möglich, die Brückenkonsole mit darin integrierter Bedieneinheit als vollfunktionsfähige Kompletteinheit herzustellen und abzuprüfen. Dabei ist es zweckmäßig, gemäß einer weiteren Ausführungsform der Erfindung die elektrischen Anschlüsse zu den Bedienelementen und/oder Kontroll- und Anzeigeelementen in einem zentralen Stecker zusammenzuführen, der gleichzeitig als Diagnosestecker verwendet werden kann. Der Diagnosestecker kann beispielsweise hinter einem Ablagefach oder einem Ascher in dem Verkleidungsteil angeordnet werden.

Gemäß einer bevorzugten Ausführungsform der Erfindung ist die Brückenkonsole in Richtung ihrer Normalen zur Oberfläche verschiebbar so ausgebildet, daß sie auf die Vorderfläche des Mittelteils der Instrumententafel aufsetzbar ist. Alternativ kann sie auch um eine nahe der Mittelkonsole angeordnete, quer zur Längsachse von Brücken- und Mittelkonsole ausgerichtete Schwenkachse schwenkbar gemacht werden, wobei sie ebenfalls in jeder Schwenkstellung festgesetzt werden kann, was form- oder kraftschlüssig erfolgen kann. Aufgrund der Verschiebbarkeit bzw. der Schwenkbarkeit der Brückenkonsole kann die integrierte Bedieneinheit aus ergonomischer Sicht optimal zum jeweiligen Fahrer positioniert werden.

Wenn gemäß einer bevorzugten Ausführungsform der Erfindung in der Vorderfläche des Mittelteils der Instrumententafel eine Luftaustrittsöffnung und in den Seitenteilen des Mittelteils jeweils eine mittels einer Klappe absperrbare Luftaustrittsöffnung vorgesehen ist und die Luftaustrittsöffnung in der Vorderfläche des Mittelteils und die Rückseite der Brückenkonsole im Bereich dieser Luftaustrittsöffnung so aufeinander abgestimmt sind, daß bei auf die Vorderfläche des Mittelteils aufgesetzter Brückenkonsole die Luftaustrittsöffnung verschlossen ist, so ist durch die Verschiebbarkeit der Brückenkonsole gleichzeitig die Möglichkeit für verschiedene Belüftungsarten des Frontraums der Fahrgastzelle gegeben. Ist die Brückenkonsole auf das Mittelteil der Instrumententafel aufgesetzt, so erfolgt die Belüftung durch die seitlichen Luftaustrittsöffnungen, die wahlweise abgesperrt werden können. Wird die Brückenkonsole von dem Mittelteil des Instrumententeils abgehoben, so setzt mit Schließen der seitlichen Luftaustrittsöffnungen eine indirekte Belüftung durch den sich zwischen der Rückseite der Brückenkonsole und der die Luftaustrittsöffnung enthaltenden Vorderfläche des Mittelteils bildenden Spalt ein. Werden die Absperrklappen an den seitlichen Luftaustrittsöffnungen im Mittelteil geöffnet, so ist ein Zustand maximaler Belüftung erreicht.

Die Erfindung ist anhand von in der Zeichnung dargestellten Ausführungsbeispielen im folgenden näher beschrieben. Es zeigen jeweils in schematischer Darstellung:
- Fig. 1: eine perspektivische Ansicht eines Verkleidungsteils zum Anbau an eine Stirnwand einer Fahrgastzelle eines Fahrzeugs,
- Fig. 2: einen Längsschnitt des Verkleidungsteils in Fig. 1 gemäß Schnittlinie II-II in Fig. 3,
- Fig. 3: einen Schnitt längs der Linie III-III in Fig. 2,
- Fig. 4: eine gleiche perspektivische Darstellung wie in Fig. 1 eines modifizierten Verkleidungsteils,
- Fig. 5: einen Längsschnitt des Verkleidungsteils in Fig. 4 gemäß Schnittlinie V-V in Fig. 6,
- Fig. 6: einen Schnitt längs der Linie VI-VI in Fig. 5,
- Fig. 7: eine gleiche Darstellung wie in Fig. 5 eines modifizierten Verkleidungsteils.

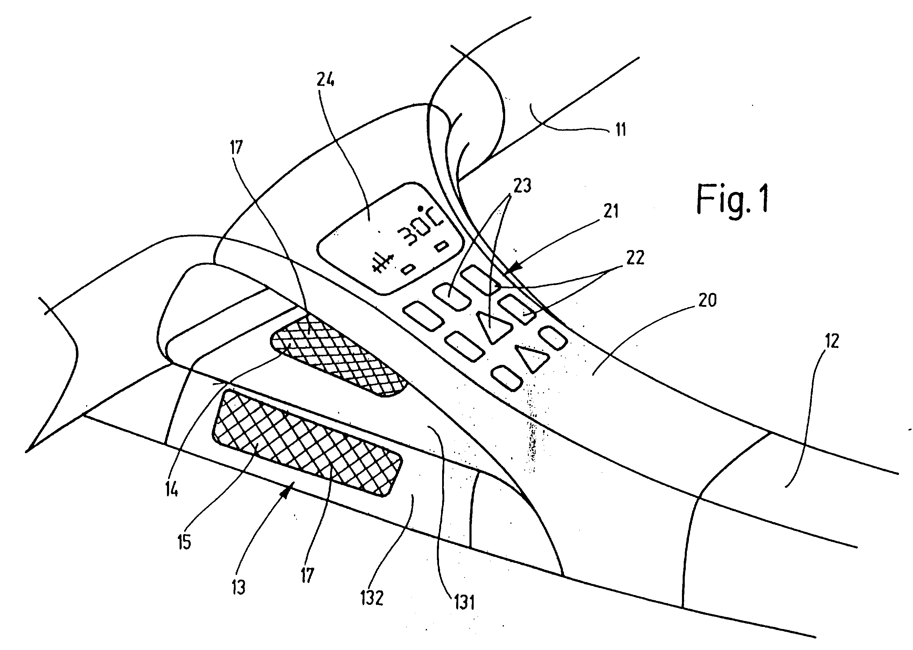

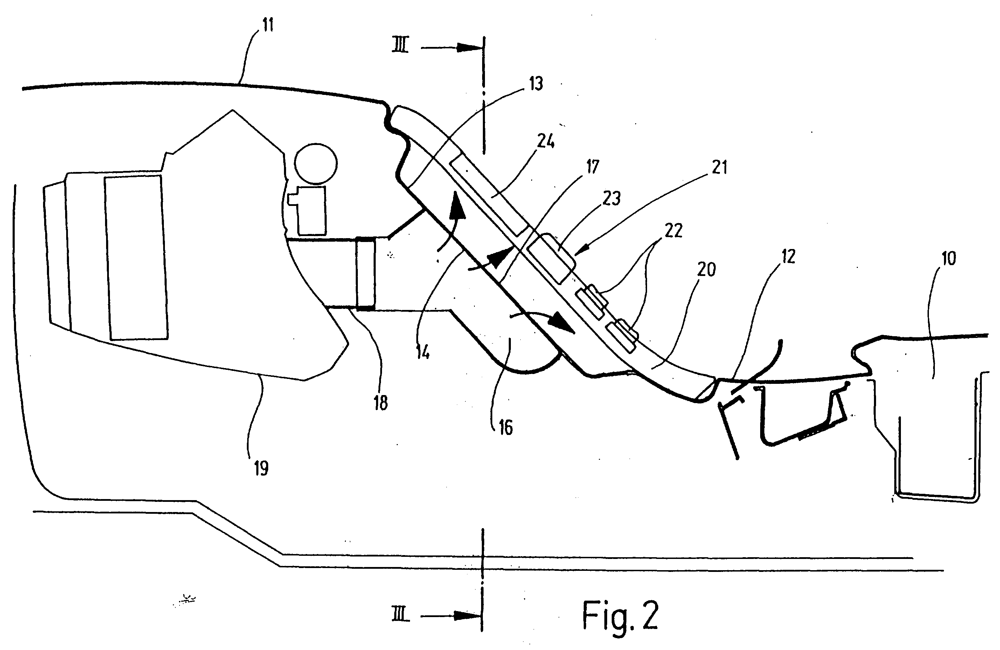

Das in Fig. 1 schematisiert perspektivisch und ausschnittweise dargestellte Verkleidungsteil zum Anbau an eine Stirnwand, welche in einer Fahrzeugkarosserie die Fahrgastzelle von dem Motorraum des Fahrzeugs trennt, umfaßt eine bis zur Unterseite einer die Fahrgastzelle vorn abschließenden Frontscheibe reichende Instrumententafel sowie eine mittig am unteren Instrumententafelbereich ansetzende, sich in Längsrichtung der Fahrgastzelle zwischen den Vordersitzen fortsetzende Mittelkonsole 12. Die Instrumententafel 11, auch Armaturenbrett genannt, weist ein zur Mittelkonsole 12 schräg geneigt verlaufendes und endseitig in die Mittelkonsole 12 übergehendes, haubenförmiges Mittelteil 13 mit einer Vorderfläche 131 und zwei davon abgewinkelten Seitenflächen 132 und 133 auf. In der Vorderfläche 131 und in jeder Seitenfläche 132,133 ist jeweils eine Luftaustrittsöffnung 14 bzw. 15 und 16 angeordnet, die von einem Lüftungsgitter 17 abgedeckt ist. Wie hier nicht weiter dargestellt ist, sind die beiden Luftaustrittsöffnungen 15,16 in den Seitenflächen 132 und 133 des Mittelteils 13 durch Absperrklappen verschließbar. Wie aus der Schnittdarstellung in Fig. 2 hervorgeht, sind die Luftaustrittsöffnungen 14 - 16 über einen vom Verkleidungsteil abgedeckten Luftkanal 18 an dem Klimakasten 19 einer Klimaanlage angeschlossen. Die Mittelkonsole 12 enthält üblicherweise Staufächer, wie eines in Fig. 2 mit 10 angedeutet ist.

Zum Verkleidungsteil gehört noch eine Brückenkonsole 20, die das Mittelteil 13 im Abstand zu dessen Vorderfläche 131 überspannt und sich von dem oberen Instrumententafelbereich bis zur Mittelkonsole 12 erstreckt. Wie besonders aus Fig. 2 ersichtlich ist, setzt die Brückenkonsole 20 mit ihrem einen Ende bündig an der Oberkante der Instrumententafel 11 an und schmiegt sich - wie Fig. 1 zeigt - mit ihrem anderen Ende an die Umrißkontur der Mittelkonsole 12 an. Die Brückenkonsole 20 ist dabei leicht trennbar von der Instrumententafel 11 und der Mittelkonsole 12 ausgebildet, so daß sie jederzeit montiert und demontiert werden kann. Die Oberseite der Brückenkonsole 20 ist leicht gewölbt und längs ihrer Seitenkanten abgerundet und nimmt eine Bedieneinheit 21 aus einer Vielzahl von Bedienelementen 22, Kontrolleuchten 23 und Anzeigeelementen, die hier in einem Display 24 zusammengefaßt sind, auf.

Alle elektrischen Anschlüsse der Elemente innerhalb der Bedieneinheit 21, wie Bedienelemente 22, Kontrolleuchten 23 und Display 24, werden in einem hier nicht dargestellten zentralen Stecker zusammengefaßt, der an geeigneter, gut zugänglicher Stelle im Verkleidungsteil positioniert wird und als Diagnosestecker für die Brückenkonsole 20 genutzt werden kann. Um die Bautiefe der Brückenkonsole 20 niedrig zu halten, werden die als Schalter ausgeführten Bedienelemente 22 in Folientechnik realisiert.

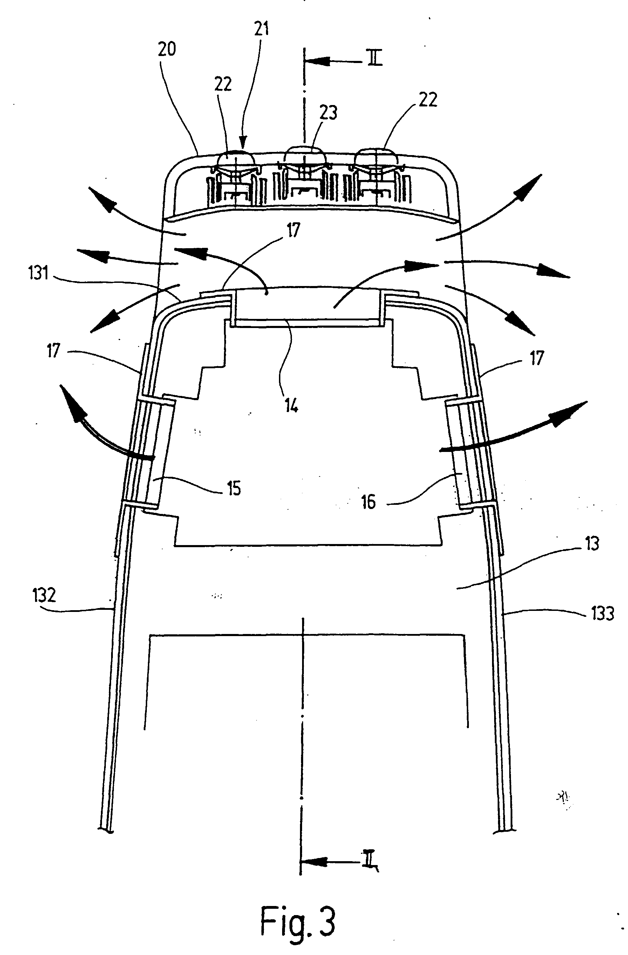

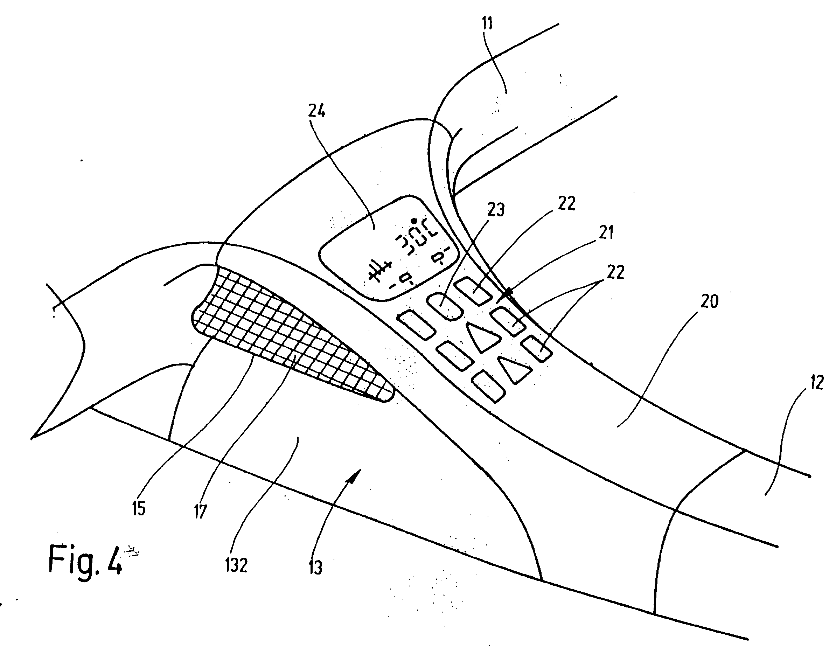

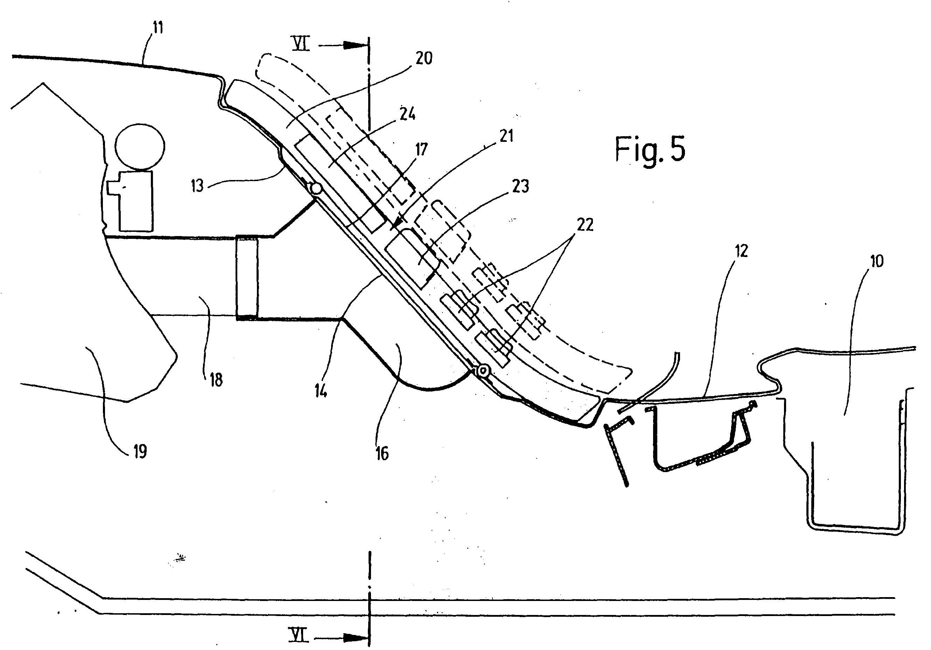

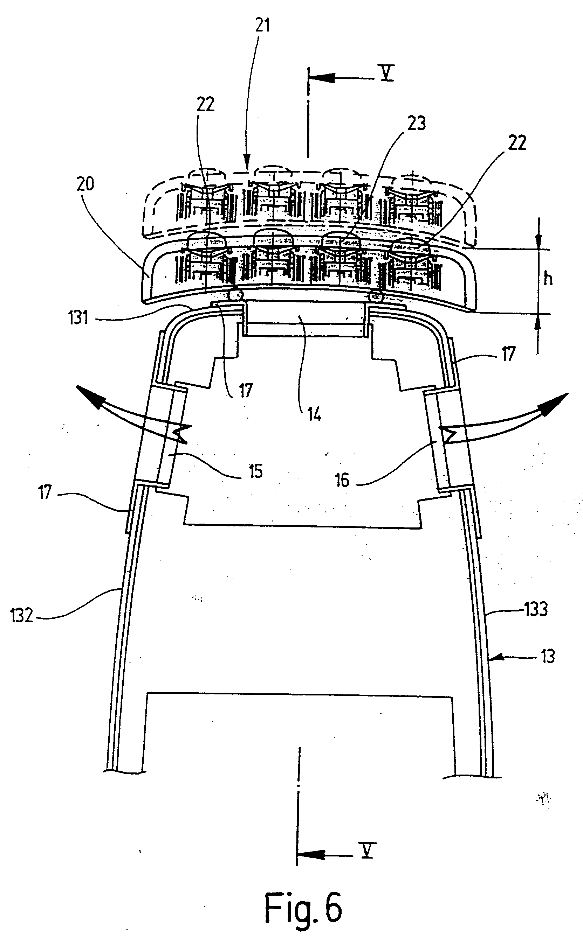

Das in Fig. 4 perspektivisch und in Fig. 5 und 6 in verschiedenen Schnitten dargestellte Verkleidungsteil ist insoweit modifiziert, als die Brückenkonsole 20 nicht fest mit Instrumententafel 11 und Mittelkonsole 12 verbunden ist, sondern in Richtung ihrer Normalen zur ihrer die Bedieneinheit 21 aufnehmenden Oberfläche verschiebbar so ausgebildet ist, daß sie auf die Vorderfläche 131 des Mittelteils 12 aufsetzbar ist. Im übrigen stimmt das Verkleidungsteil gemäß Fig. 4 - 6 mit dem Verkleidungsteil gemäß Fig. 1 - 3 überein, so daß gleiche Bauteile mit gleichen Bezugszeichen versehen sind.

Wie besonders deutlich in der schematischen Schnittdarstellung in Fig. 5 zu sehen ist, schließt die auf das Mittelteil 13 der Instrumententafel 11 aufgesetzte Brückenkonsole 20 bündig mit der Oberkante der Instrumententafel 11 und der Oberfläche der Mittelkonsole 12 ab. Die Rückseite der Brückenkonsole 20 ist dabei im Bereich der Luftaustrittsöffnung 14 in der Vorderfläche 131 des Mittelteils 13 so auf die Vorderfläche 131 abgestimmt, das sie die Luftaustrittsöffnung 14 in der Vorderfläche 131 zu verschließen vermag. Die über den Luftkanal 18 den Luftaustrittsöffnungen 14 - 16 zugeführte Luft kann nunmehr nur noch über die Luftaustrittsöffnungen 15,16 in den Seitenflächen 132,133 des Mittelteils 13 austreten, sofern die diesen Luftaustrittsöffnungen 15 und 16 zugeordneten Absperrklappen geöffnet sind. Wie in Fig. 5 und 6 strichliniert angedeutet ist, kann die Brückenkonsole 20 in Richtung ihrer Normalen um den maximalen Betrag h von der Vorderfläche 131 des Mittelteils 13 abgehoben und in jeder Zwischenstellung im Abhebeweg kraft- oder formschlüssig fixiert werden. Damit bildet sich zwischen der Vorderfläche 131 des Mittelteils 13 und der Rückseite der Brückenkonsole 20 ein Spalt, über den nunmehr die aus der Luftaustrittsöffnung 14 in der Vorderfläche 131 des Mittelteils 13 ausströmende Luft seitlich abströmen kann. Bei geschlossenen Luftaustrittsöffnungen 15,16 in den Seitenflächen 132,133 des Mittelteils 13 kann somit eine diffuse Belüftung im Frontraum erzeugt werden. Durch die Verschiebbarkeit der Brückenkonsole 20 kann die Bedieneinheit 21 aus ergonomischer Sicht optimal zum jeweiligen Benutzer des Fahrzeugs positioniert werden.

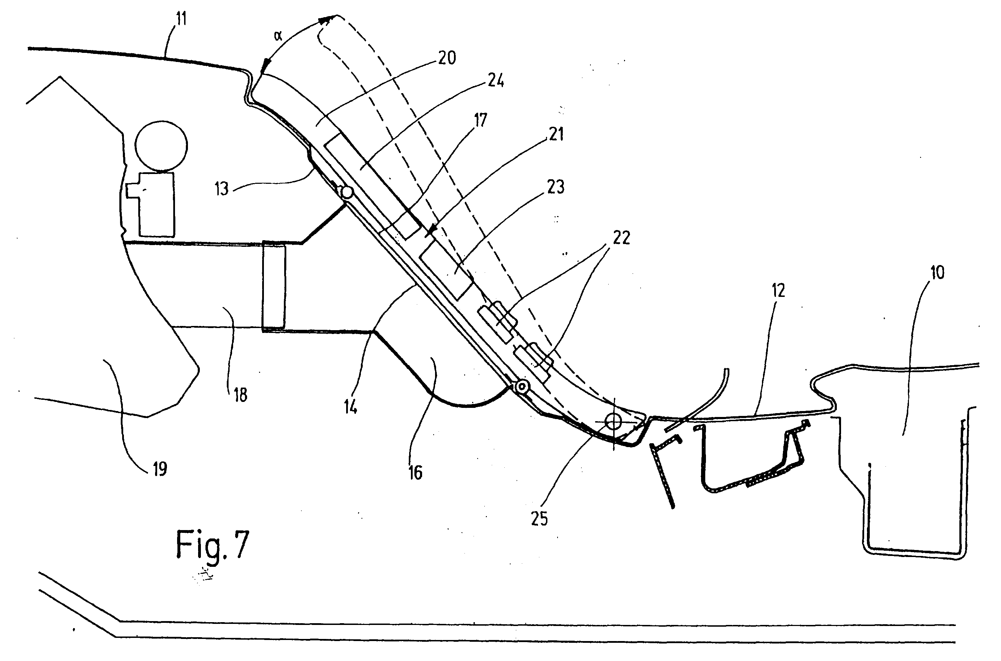

Das in Fig. 7 dargestellte Verkleidungsteil ist gegenüber dem zu Fig. 5 und 6 beschriebenen Verkleidungsteil nur insoweit modifiziert, als die Brückenkonsole 20 nicht verschiebbar sondern verschwenkbar ausgebildet ist. Hierzu sitzt die Brückenkonsole 20 mit ihrem unteren Teil auf einer Schwenkachse 25, die im Übergangsbereich von Mittelteil 11 zur Brückenkonsole 12 in dem Mittelteil 11 oder in der Mittelkonsole 12 quer zur Längsachse von Brücken- und Mittelkonsole 20,12 festgelegt ist. Durch hier nicht dargestellte Mittel kann die Brückenkonsole 20, die nur um einen begrenzten Winkel α schwenkbar ist, in jeder Schwenkstellung kraft- oder formschlüssig festgelegt werden. Im übrigen stimmt Aufbau und Wirkungsweise des Verkleidungsteils gemäß Fig. 7 mit dem in Fig. 5 und 6 überein, so daß gleiche Bauteile mit gleichen Bezugszeichen versehen sind.

## Patentansprüche

1. Verkleidungsteil zum Anbau an eine Stirnwand einer Fahrgastzelle, mit einer Instrumententafel (11), mit einer mittig in Längsrichtung der Fahrgastzelle sich erstreckenden Mittelkonsole (12)und mit einem mittig am unteren Instrumententafelbereich ansetzenden, schräg geneigt verlaufenden und endseitig in die Mittelkonsole (12) übergehenden, haubenförmigen Mittelteil (13),
**dadurch gekennzeichnet,**
daß eine das Mittelteil (13) im Abstand zu dessen Vorderfläche (131) überspannende Brückenkonsole (20) sich von dem oberen Instrumententafelbereich bis zur Mittelkonsole (12) erstreckt und daß in dem Mittelteil (13) Luftaustrittsöffnungen (14,15,16) ausgebildet sind.

2. Verkleidungsteil nach Anspruch 1,
**dadurch gekennzeichnet,**
daß die Brückenkonsole (20) mit ihrem einen Ende an der Oberkante der Instrumententafel (11) bündig ansetzt und mit ihrem anderen Ende sich an die Umrißkonturen der Mittelkonsole (12) anschmiegt.

3. Verkleidungsteil nach Anspruch 1 oder 2,
**dadurch gekennzeichnet,**
daß die Brückenkonsole (20) trennbar von der Instrumententafel (11) und der Mittelkonsole (12) ausgebildet ist.

4. Verkleidungsteil nach einem der Ansprüche 1 - 3,
**dadurch gekennzeichnet,**
daß die Oberseite der Brückenkonsole (20) leicht gewölbt und an ihren Seitenkanten abgerundet ist.

5. Verkleidungsteil nach einem der Ansprüche 1 - 4,
**dadurch gekennzeichnet,**
daß eine Luftaustrittsöffnung (14) in der Vorderfläche (131) des Mittelteils (13) und jeweils eine weitere Luftaustrittsöffnung (15,16) in jeder Seitenfläche (132,133) des Mittelteils (13) angeordnet ist.

6. Verkleidungsteil nach Anspruch 5,
**dadurch gekennzeichnet,**
daß den Luftaustrittsöffnungen (15,16) in den Seitenflächen (132,133) des Mittelteils (13) jeweils eine Absperrklappe zugeordnet ist.

7. Verkleidungsteil nach einem der Ansprüche 1 - 6,
**dadurch gekennzeichnet,**
daß die Brückenkonsole (20) in Richtung ihrer Normalen zur Oberfläche verschiebbar so ausgebildet ist, daß sie auf die Vorderfläche (131) des Mittelteils (13) aufsetzbar und in jeder Verschiebeposition festsetzbar ist.

8. Verkleidungsteil nach einem der Ansprüche 1 - 6,
**dadurch gekennzeichnet,**
daß die Brückenkonsole (20) um eine nahe der Mittelkonsole (12) angeordnete, quer zur Erstreckungsrichtung der Brückenkonsole (20) ausgerichtete Schwenkachse (25) um einen vorgegebenen Schwenkwinkel (α) schwenkbar und in jeder Schwenkstellung festsetzbar ausgebildet ist.

9. Verkleidungsteil nach Anspruch 7 oder 8,
**dadurch gekennzeichnet,**
daß die Luftaustrittsöffnung (14) in der Vorderfläche (131) des Mittelteils (13) und die Rückseite der Brückenkonsole (20) im Bereich der Luftaustrittsöffnung (14) so aufeinander abgestimmt sind, daß bei auf die Vorderfläche (131) des Mittelteils (13) aufgesetzter Brückenkonsole (20) die Luftaustrittsöffnung (14) verschlossen ist.

10. Verkleidungsteil nach einem der Ansprüche 1- 9,
**dadurch gekennzeichnet,**
daß auf der Oberseite der Brückenkonsole (20) eine Bedieneinheit (21) mit Bedienelementen (22) und/oder Kontroll- und Anzeigeelementen (23,24) angeordnet ist.

11. Verkleidungsteil nach Anspruch 10,
**dadurch gekennzeichnet,**
daß alle zu den Bedienelementen (22) und/oder Kontroll- und Anzeigeelementen (23,24) führenden elektrischen Anschlüsse in einem zentralen Stecker zusammengefaßt sind.

12. Verkleidungsteil nach Anspruch 10 oder 11,
**dadurch gekennzeichnet,**
daß als Schalter ausgebildeten Bedienelemente (22) in Folientechnik ausgeführt sind.
